# EUROPÄISCHE PATENTANMELDUNG

(11) **EP 2 615 347 A2**
(43) Veröffentlichungstag der Anmeldung: **17.07.2013**
(21) Anmeldenummer: 12007985.0
(22) Anmeldetag: 28.11.2012
(51) Int. Cl.: F16L 37/084

(54) **Kupplungselement und Entriegelungselement für das Kupplungselement**

(30) Priorität: 16.01.2012 DE 102012000607
(71) Anmelder: NORMA Germany GmbH, 63477 Maintal (DE)
(72) Erfinder: Semmel, Patrick, D-63589 Linsengericht (DE); Stoll, Viktor, D-63538 Großkrotzenburg (DE)
(74) Vertreter: Knoblauch, Andreas

(57) **Zusammenfassung**

Die Erfindung betrifft ein Kupplungselement (15) mit einer Rastvorrichtung (23) zum rastenden Verbinden mit einem Einsteckelement (16). Um auch unter beengten Raumverhältnissen ein einfaches Entriegeln der Rastvorrichtung (23) zu ermöglichen, ist ein Entriegelungselement (1) vorgesehen, das mit Entriegelungshebeln (26, 27) der Rastvorrichtung (23) zusammenwirken kann. Ferner betrifft die Erfindung ein entsprechendes Entriegelungselement (1).

## Beschreibung

Die Erfindung betrifft ein Kupplungselement für eine Fluidleitung mit einem Gehäuse, das einen Aufnahmebereich zur Aufnahme eines Einsteckelements aufweist, wobei der Aufnahmebereich eine Rastvorrichtung zum rastenden Verbinden mit dem Einsteckelement aufweist, die mindestens ein Rastelement umfasst, das einen Entriegelungshebel aufweist.

Ferner betrifft die Erfindung ein Entriegelungselement für ein derartiges Kupplungselement.

Derartige Kupplungselemente werden zum Anschluss von Fluidleitungen an Stutzen verwendet, die beispielsweise an einem Kraftstofftank angeschlossen sind. Sie können auch eingesetzt werden, um zwei Leitungen zu verbinden, beispielsweise in einem Fahrzeug. Beispielsweise erfolgt über das Kupplungselement eine fluiddichte Verbindung von so genannten UREA-Leitungen.

Die mit dem Kupplungselement zu verbindende Leitung weist ein Einsteckelement auf, das in den Aufnahmebereich eingeführt werden kann. Das Einsteckelement weist eine Rastgeometrie auf, wie beispielsweise einen umlaufenden Flansch, der mit der Rastvorrichung, die im Aufnahmebereich angeordnet ist, zusammenwirken kann. Damit kann das Einsteckelement innerhalb des Kupplungselements verrastet werden, so dass eine sichere Verbindung gewährleistet ist.

Zum Lösen der Rastvorrichtung ist das Rastelement mit einem Entriegelungshebel versehen, bei dessen Betätigung das Rastelement das Einsteckelement freigibt.

Häufig werden Kupplungselemente bei beengten Raumverhältnissen eingesetzt, beispielsweise im Automobilbereich. Dadurch ist es oft relativ schwierig, den Entriegelungshebel zu betätigen. Ein Lösen des Kupplungselements gestaltet sich dementsprechend aufwendig.

Der Erfindung liegt nun die Aufgabe zugrunde, ein einfaches Lösen der Rastvorrichtung zu ermöglichen.

Erfindungsgemäß wird diese Aufgabe mit einem Kupplungselement der eingangs genannten Art dadurch gelöst, dass ein Entriegelungselement zwischen einer ersten Stellung, in der es mit dem Entriegelungshebel zusammenwirkt, und einer zweiten Stellung, in der das Entriegelungselement den Entriegelungshebel freigibt, bewegbar ist.

Die Entriegelungshebel der Rastvorrichtung müssen dann nicht mehr direkt bedient werden, sondern werden indirekt über das Entriegelungselement bedient. Die erforderliche Bedienkraft wird über die Bewegung des Entriegelungselements übertragen. Dabei kann auch eine Kraftübersetzung erfolgen.

Dabei ist besonders bevorzugt, dass das Entriegelungselement linear verschiebbar gelagert ist. Eine lineare Verschiebebewegung ist relativ einfach erzeugbar, beispielsweise durch Ziehen oder Drücken am Entriegelungselement. Gleichzeitig lässt sich das Entriegelungselement relativ spielfrei lagern, was insbesondere dann vorteilhaft ist, wenn das Kupplungselement Vibrationen ausgesetzt ist.

Vorzugsweise ist der Entriegelungshebel einstückig mit dem Rastelement ausgebildet. Sowohl das Rastelement als auch der Entriegelungshebel können beispielsweise aus Kunststoff gebildet sein. Eine einstückige Ausbildung ist dabei relativ einfach möglich. Auch ergibt sich durch die einstückige Ausbildung eine sehr direkte Kraftübertragung ohne zusätzliche Koppelstellen, die schmutz- und/oder reparaturanfällig sein könnten.

Bevorzugterweise weist die Rastvorrichtung mindestens zwei Rastelemente auf, die auf einer Kreisbahn angeordnet sind, wobei durch Drücken des Entriegelungshebels radial nach innen das Rastelement radial nach außen bewegbar ist. Im Falle von zwei Rastelementen sind diese dabei vorzugsweise diametral gegenüber an Seiten des Gehäuses des Kupplungselements angeordnet. Eine Druckkraft auf die Entriegelungshebel auszuüben, ist relativ einfach, indem beispielsweise das Entriegelungselement über eine Außenseite der Entriegelungshebel bewegt wird. Damit dann das Rastelement radial nach außen bewegt wird, ist die Kombination von Entriegelungshebel und Rastelement verschwenkbar gelagert. Dafür kann ein stoffschlüssiges Gelenk vorgesehen sein, das beispielsweise durch die Elastizität des verwendeten Materials gebildet ist und einstückig mit dem Entriegelungshebel und dem Rastelement ausgebildet sein kann.

Vorzugsweise weist das Entriegelungselement eine der Anzahl der Rastelemente entsprechende Anzahl an parallel angeordneten Stegen auf, die jeweils eine Wirkfläche zum Zusammenwirken mit einem der Entriegelungshebeln aufweisen. Über die Stege kann dann eine Zug- oder Druckkraft, die eine Verschiebung des Entriegelungselements bewirkt, relativ weit entfernt von der Rastvorrichtung eingebracht werden. Auch können die Stege eine relativ lange Führungsfläche für das Entriegelungselement bilden, so dass eine relativ stabile und insbesondere klapperfreie Lagerung des Entriegelungselements am Gehäuse des Kupplungselements möglich ist.

Vorzugsweise sind die Wirkflächen an radial nach innen gerichteten Vorsprüngen angeordnet, die insbesondere an Enden der Stege ausgebildet sind. Durch die Vorsprünge können die Wirkflächen von den Stegen beabstandet werden. Dadurch können die Wirkflächen relativ einfach mit den Entriegelungshebeln zusammenwirken. Die Vorsprünge verstärken dabei eine radial nach innen gerichtete Kraft, die über die Wirkflächen auf die Entriegelungshebel wirkt und damit ein Öffnen der Rastvorrichtung bewirkt. Durch einfaches Verschieben des Entriegelungselements können dann die Wirkflächen mit den Entriegelungshebeln in Deckung gebracht werden und üben aufgrund der Vorsprünge automatisch eine radial nach innen gerichtete Kraft auf die Entriegelungshebel auf, die damit ein Öffnen der Rastvorrichtung bewirken.

Bevorzugterweise sind die Stege an den Enden, an denen die Vorsprünge ausgebildet sind, miteinander verbunden, wobei die Verbindung gegebenenfalls bogenförmig ausgebildet ist, deren Krümmung insbesondere parallel zu einer Krümmung des Gehäuses im Aufnahmebereich verläuft. Die Verbindung verhindert ein Aufbiegen der Stege, wenn diese eine radial nach innen gerichtete Kraft auf die Entriegelungshebel übertragen. Dadurch lässt sich eine relativ große Kraft übertragen, ohne dass das Entriegelungselement verformt wird. Durch eine bogenförmige Ausgestaltung der Verbindung, deren Krümmung parallel zu einer Krümmung des Gehäuses im Aufnahmebereich verläuft, verläuft die Verbindung sozusagen entlang einer Außenseite des Gehäuses, so dass nicht viel zusätzlicher Bauraum benötigt wird. Das Kupplungselement kann damit schlank gehalten werden.

In einer bevorzugten Ausgestaltung sind die Stege an ihren den Vorsprüngen abgewandten zweiten Enden über eine zweite Verbindung miteinander verbunden. Diese zweite Verbindung bewirkt eine Versteifung des Entriegelungselements. Gleichzeitig stellt sie sicher, dass alle Stege gleichförmig bewegt werden, so dass alle Rastelemente gleichzeitig betätigt werden.

Bevorzugterweise weist die zweite Verbindung einen Bediengriff auf, der insbesondere mittig zwischen den Stegen angeordnet ist. Mithilfe eines Bediengriffes vereinfacht sich die Handhabung, wobei der Bediengriff beispielsweise auch derartig ausgelegt werden kann, dass eine Bedienung mit Handschuhen einfach möglich ist.

Vorzugsweise verläuft die zweite Verbindung parallel zur ersten Verbindung. Die zweite Verbindung ist also ebenfalls gekrümmt ausgebildet mit einer Krümmung, die parallel zum Gehäuse des Kupplungselements verläuft. Eine raumsparende Anordnung des Entriegelungselements am Gehäuse des Kupplungselements ist damit möglich.

In einer anderen bevorzugten Ausführungsform verläuft die zweite Verbindung in einer Ebene mit den Stegen und weist insbesondere eine Krümmung auf, die von den ersten Enden weg gerichtet ist. Eine derartige Ausgestaltung des Entriegelungselements bietet sich insbesondere bei Kupplungselementen an, die um 90° gebogen sind, wobei das Entriegelungselement insbesondere nur zwei Stege aufweist. Die Krümmung der zweiten Verbindung kann dann ebenfalls an das Gehäuse des Kupplungselements angepasst sein, so dass nur wenig zusätzlicher Bauraum benötigt wird.

Die Stege sind insbesondere axial am Kupplungselement verschiebbar geführt, beispielsweise seitlich außen am Gehäuse des Kupplungselements. Bei einer Ausgestaltung des Entriegelungselements mit zwei Stegen können diese diametral gegenüberliegend an je einer Seite des Gehäuses des Kupplungselements geführt sein. Das Kupplungselement kann dafür beispielsweise eine Führung aufweisen, die durch jeweils zwei Vorsprünge je Steg gebildet ist. Es ist auch denkbar, eine Nut vorzusehen, in der die Stege geführt sind.

Bevorzugterweise sind die Rastelemente axial zwischen einer Blockadestellung, in der eine Bewegung der Entriegelungshebel blockiert ist, und einer freien Stellung verschiebbar, in der die Entriegelungshebel betätigbar sind. Dadurch ist ein Sperren einer Betätigung der Entriegelungshebel möglich und damit ein ungewolltes Öffnen der Rastvorrichtung verhinderbar. Beispielsweise kann dafür gesorgt werden, dass durch die axiale Bewegung der Rastelemente die Entriegelungshebel oberhalb von Erhebungen platziert werden, wobei die Erhebungen ein Eindrücken der Entriegelungshebel verhindern.

Dabei ist besonders bevorzugt, dass die Vorsprünge des Entriegelungselements mit Vorsprüngen an den Rastelementen derart zusammenwirken, dass bei Einbringen einer Zugkraft auf das Entriegelungselement die Rastelemente von der Blockierstellung in die freie Stellung bewegbar sind. Mithilfe des Entriegelungselements sind dann nicht nur die Entriegelungshebel betätigbar, sondern auch die Rastelemente von der Blockierstellung in eine freie Stellung verschiebbar.

Dabei ist besonders bevorzugt, dass bei Erhöhung der Zugkraft die Vorsprünge des Entriegelungselements über die Vorsprünge der Rastelemente gleiten können, so dass die Wirkflächen mit den Entriegelungshebeln zusammen wirken. Mit einer einfachen Zugbewegung, die auf das Entriegelungselement ausgeübt wird, können dann zuerst die Rastelemente von der Blockierstellung in die freie Stellung bewegt werden und daran anschließend automatisch die Entriegelungshebel betätigt werden, so das die Rastvorrichtung öffnet. Die Erhöhung der Zugkraft ergibt sich dann automatisch dadurch, dass die Rastelemente nach Erreichen der freien Stellung an einer weiteren Bewegung gehindert werden, indem sie beispielsweise an einen Stopper anstoßen.

Vorzugsweise sind an den zweiten Enden der Stege und/oder am Griff eine geriffelte Oberfläche vorgesehen. Dadurch vereinfacht sich das Einbringen einer Zugkraft auf das Entriegelungselement insbesondere bei feuchten Verhältnissen oder bei der Bedienung mit Handschuhen.

Vorteilhafterweise sind die Rastelemente nach Verrasten mit dem Einsteckelement durch Zug am Einsteckelement in die Blockadestellung bewegbar. Dieses Einbringen einer Zugbewegung zwischen dem Einsteckelement und dem Kupplungselement dient also zunächst dazu, die Rastelemente in die Blockierstellung zu bewegen und damit ein Lösen zu verhindern. Gleichzeitig wird dabei aber auch sichergestellt, dass das Einsteckelement sicher in der Rastvorrichtung gehalten ist, also ordnungsgemäß im Aufnahmebereich eingeführt worden ist. Bei einer nicht ordnungsgemäßen Verbindung würde durch das Aufbringen der Zugkraft das Einsteckelement sonst wieder gelöst werden.

Dabei ist bevorzugterweise ein Montageindikator vorgesehen, der nach Verschieben der Rastelemente in die Blockadestellung in eine Position verschiebbar ist, die eine sichere Verbindung signalisiert. Gleichzeitig kann der Montageindikator dann ein Zurückschieben der Rastelemente verhindern. Der Montageindikator muss dann zunächst entfernt oder zumindest bewegt werden, bevor die Rastelemente in die freie Stellung bewegt werden können. Beispielsweise ist dafür der Montageindikator in einen Raum bewegbar, der durch Bewegen der Rastelemente von der Freien-Stellung in die Blockier-Stellung freigegeben wird.

Die der Erfindung zugrunde liegende Aufgabe wird auch durch ein Entriegelungselement mit den Merkmalen des Anspruchs 14 gelöst. Die Ausführungen zum Kupplungselement gelten in entsprechender Weise.

Die Anzahl der parallel angeordneten Stege kann beispielsweise einer Anzahl an Rastelementen des Kupplungselements entsprechen. Dadurch ist es möglich, jedem Rastelement einen Steg zuzuordnen und damit eine gleichzeitige Betätigung aller Rastelemente zu gewährleisten. An Enden der Stege können radial nach innen gerichtete Vorsprünge mit Wirkflächen vorgesehen sein. Über die Wirkflächen wird dann eine radial nach innen gerichtete Kraft auf die Rastelemente ausgeübt, die dadurch geöffnet werden. Im Bereich der Vorsprünge können die Stege miteinander verbunden sein. Diese Verbindung kann bogenförmig ausgebildet sein mit einer Krümmung, die parallel zu einer Krümmung des Gehäuses im Aufnahmebereich verläuft. Die Verbindung verhindert ein radiales Aufbiegen der Stege, wobei gleichzeitig durch die gekrümmte Ausbildung der Verbindung das Entriegelungselement relativ gut an die Form des Kupplungselements angepasst werden kann. Dadurch ist für das Kupplungselement nur wenig zusätzlicher Bauraum erforderlich.

An einem zweiten Ende der Stege, das von den Vorsprüngen abgewandt ist, können die Stege ebenfalls über eine Verbindung verbunden sein. Diese zweite Verbindung kann parallel zur ersten Verbindung verlaufen oder eine Krümmung aufweisen, die senkrecht zur Krümmung der ersten Verbindung verläuft. Dadurch ist eine Anpassung der Form des Entriegelungselements an die Form des Kupplungselements möglich.

Das Entriegelungselement vereinfacht also ein Entriegeln des Kupplungselements und damit ein Entfernen eines mit dem Kupplungselement verbundenen Einsteckelements. Dabei ist eine Entriegelung auch bei beengten Raumverhältnissen, problemlos möglich, da beispielsweise die Rastelemente nicht mehr per Hand erreicht werden müssen, sondern über das Entriegelungselement betätigt werden können. Die Rastelemente werden also indirekt über das Entriegelungselement entriegelt. Durch das Entriegelungselement wird also der Punkt, an dem manuell eingegriffen wird, verlagert, und zwar in einen Bereich, der einfacher zugänglich ist als der Bereich, in dem die Rastelemente angeordnet sind. Insbesondere bei beengten Raumverhältnissen wird damit der Einsatzbereich des Kupplungselements erweitert. Dabei verkürzen sich durch das Entriegelungselement zu erwartende Montagearbeiten, beispielsweise falls ein Austausch wegen Reparatur erforderlich ist.

Die Erfindung wird im Folgenden anhand eines bevorzugten Ausführungsbeispiels in Verbindung mit der Zeichnung näher beschrieben. Hierin zeigen:
- Fig. 1: ein Entriegelungselement einer ersten Ausführungsform,
- Fig. 2: ein Entriegelungselement einer zweiten Ausführungsform,
- Fig. 3: ein Kupplungselement mit dem Entriegelungselement der ersten Ausführungsform,
- Fig. 4: ein Kupplungselement mit dem Entriegelungselement der zweiten Ausführungsform,
- Fig. 5: eine Schnittdarstellung des Kupplungselements im verriegelten Zustand und
- Fig. 6: eine Schnittdarstellung des Kupplungselements im geöffneten Zustand.

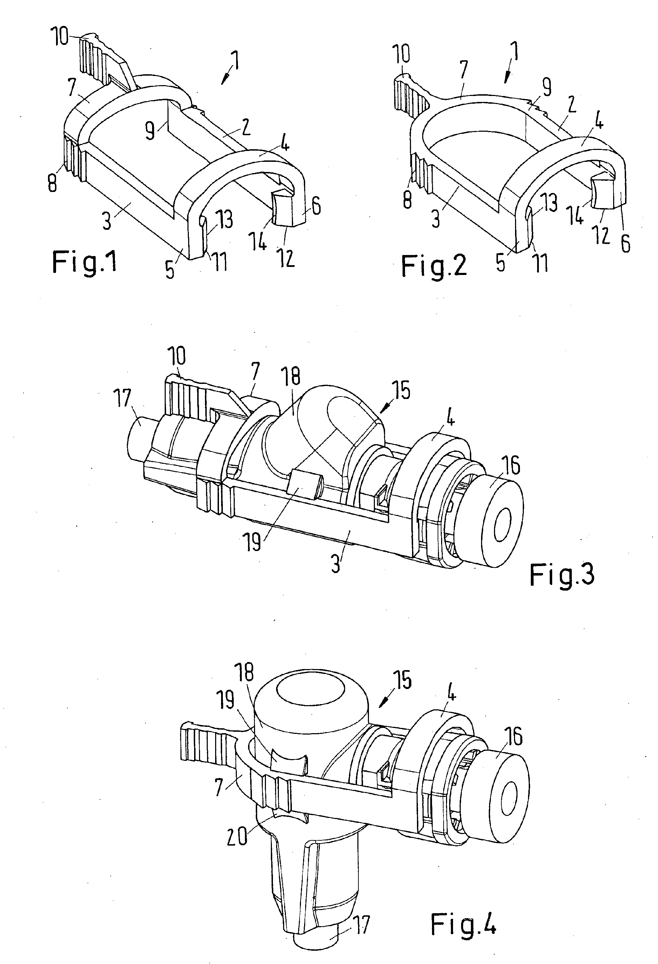

In Fig. 1 ist ein Entriegelungselement 1 einer ersten Ausführungsform gezeigt. Das Entriegelungselement 1 weist zwei parallel zueinander angeordnete Stege 2, 3 auf, die über eine erste Verbindung 4 an ersten Enden 5, 6 und über eine zweite Verbindung 7 an ihren zweiten Enden 8, 9 miteinander verbunden sind. Die erste Verbindung 4 und die zweite Verbindung 7 sind gekrümmt ausgebildet und an einer Oberseite der Stege 2, 3 angeordnet. Dabei verlaufen die erste Verbindung 4 und die zweite Verbindung 7 parallel zueinander.

Die erste Verbindung 4 bildet mit der zweiten Verbindung 7 und den Stegen 2, 3 ein Rechteck. Mittig an der zweiten Verbindung 7 ist ein Betätigungsgriff 10 angeordnet, der sich zu der von der ersten Verbindung 4 abgewandten Seite erstreckt.

An den Enden 5, 6 sind nach innen und damit aufeinander zu gerichtete Vorsprünge 11, 12 ausgebildet, die jeweils eine Wirkfläche 13, 14 aufweisen, die sich an ihrer radialen Innenseite befindet. Die Wirkflächen 13, 14 können in geneigte Auflaufflächen übergehen, um Betätigungskräfte gering zu halten.

In Fig. 2 ist ein Entriegelungselement 1 einer zweiten Ausführungsform dargestellt, das sich von der Ausführungsform gemäß Fig. 1 nur durch die Anordnung der zweiten Verbindung 7 unterscheidet. Die einander entsprechende Elemente sind daher mit den gleichen Bezugszeichen versehen. Bei der Ausführungsform gemäß Fig. 2 verläuft die zweite Verbindung 7 in einer Ebene mit den Stegen 2, 3. Eine derartige Ausgestaltung ist besonders günstig für Kupplungselemente, die als 90°-Winkelstück ausgebildet sind, wie es beispielsweise in Fig. 4 dargestellt ist.

Die Stege 2, 3 mit der ersten Verbindung 4 und der zweiten Verbindung 7 sowie mit dem Betätigungsgriff 10 können einstückig aus einem Kunststoff hergestellt sein. Es ist aber auch denkbar, mehrere Teile miteinander zu verbinden, beispielsweise zu verschweißen.

An den Enden 8, 9 und am Griff 10 ist das Entriegelungselement 1 mit einer geriffelten Oberfläche versehen. Diese dient dazu, eine Betätigung in feuchten Umgebungen oder beispielsweise mit Handschuhen zu vereinfachen.

In Fig. 3 ist das Entriegelungselement 1 der ersten Ausführungsform, wie es in Fig. 1 gezeigt ist, in Verbindung mit einem Kupplungselement 15 dargestellt. Das Kupplungselement 15 dient dazu, ein stutzenförmiges Einsteckelement 16 mit einer Fluidleitung 17 fluiddicht zu verbinden. Anstelle eines stutzenförmigen Einsteckelements 16 kann auch eine weitere Fluidleitung vorgesehen sein, wobei das Einsteckelement einstückig mit einer Fluidleitung ausgebildet sein kann.

Die Stege 2, 3 des Entriegelungselements 1 sind seitlich an einem Gehäuse 18 des Kupplungselements 15 derartig angeordnet, dass sie linear verschiebbar sind. Dafür sind am Gehäuse 18 Vorsprünge 19, 20 vorgesehen, an denen in Fig. 3 nur der Vorsprung 19 zu erkennen ist. In Fig. 4 ist auch der zweite Vorsprung 20 erkennbar.

Zwischen den Stegen 2, 3 und der ersten Verbindung 4 sowie der zweiten Verbindung 7 hat das Entriegelungselement 1 einen freien Raum, durch den sich ein Teil des Gehäuses des Kupplungselements erstreckt. Durch die an eine Krümmung des Gehäuses 18 angepasste Form der Verbindungen 4, 7 ergibt sich eine sehr Platz sparende Anordnung des Entriegelungselements 1 am Kupplungselement 15.

Fig. 4 zeigt eine Ausgestaltung des Kupplungselements 15, bei der die Fluidleitung 17 und das Einsteckelement 16 nicht zueinander fluchtend angeordnet sind, sondern senkrecht zueinander. Dementsprechend erstreckt sich auch das Kupplungselement 15 in einem 90°-Winkel. Bei einer derartigen Ausgestaltung des Kupplungselements 15 findet die zweite Ausgestaltungsform des Entriegelungselements 1 Verwendung, wie sie in Fig. 2 gezeigt ist. Auch dabei sind die Verbindungen 4, 7 des Entriegelungselements 1 parallel zum Gehäuse 18 ausgebildet, so dass eine Bauraum sparende Anordnung möglich ist. In beiden Ausgestaltungen, also sowohl bei der Ausgestaltung nach Fig. 3 als auch bei der Ausgestaltung nach Fig. 4, ist das Entriegelungselement 1 linear parallel zu einer Axialrichtung des Einsteckelements 16 verschiebbar. Das Einsteckelement 16 ist in einem Aufnahmebereich 21 eingeführt, der im Gehäuse 18 des Kupplungselements 15 gebildet ist.

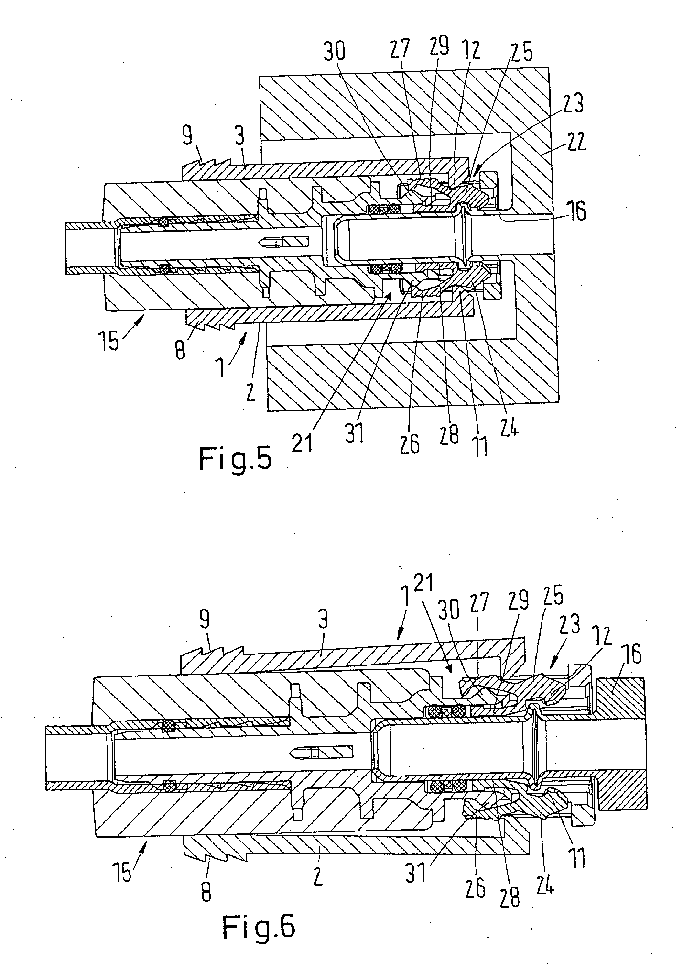

Fig. 5 zeigt eine Schnittdarstellung des Kupplungselements 15 gemäß Fig. 3, wobei das Kupplungselement 15 mit einem Einsteckelement 16 verbunden ist, das einstückig mit einer Gehäusewandung 22, beispielsweise eines Kraftstofftanks, ausgebildet ist.

Wie zu erkennen ist, steht für das Kupplungselement 15 nur relativ wenig Raum zur Verfügung.

Das Kupplungselement 15 weist eine Rastvorrichtung 23 auf, die zwei Rastelemente 24, 25 umfasst. Die Rastelemente 24, 25 sind einstückig mit Entriegelungshebeln 26, 27 ausgebildet. Die Rastelemente 24, 25 sind elastisch verschwenkbar an Führungsstegen 28, 29 angeordnet, wobei die Rastelemente 24, 25 mit den Führungsstegen 28, 29 und den Entriegelungshebeln 26, 27 einstückig ausgebildet sind.

Zwischen den Entriegelungshebeln 26, 27 und den Führungsstegen 28, 29 erstreckt sich ein Teil des Gehäuses 18 des Kupplungselements 15. Dieser Teil weist Erhebungen 30, 31 auf, die bei der gezeigten Stellung der Rastelemente 24, 25 unterhalb der Entriegelungshebel 26, 27 angeordnet sind und damit ein Eindrücken der Entriegelungshebel 26, 27 verhindern.

Die Rastelemente 24, 25 sind mit einem umlaufenden Flansch 32 des Einsteckelements 16 verrastet. Das Entriegelungselement 1 ist relativ weit in Richtung zum Einsteckelement 16 verschoben, wobei sich die Vorsprünge 11, 12 vor Vorsprüngen befinden, die sich am Anfangsbereich der Entriegelungshebel 26, 27 befinden. Dadurch ist es möglich, über das Einsteckelement 1 eine axiale Zugkraft auf die Rastelemente 24, 25 auszuüben, so dass das Kupplungselement 15 in Richtung auf das Einsteckelement 16 gedrückt werden kann, während die Rastelemente 24, 25 mithilfe des Einsteckelements 1 in entgegengesetzer Richtung gezogen werden. Dadurch wird eine Bewegung der Entriegelungshebel 26, 27 nicht weiter durch die Erhebungen 30, 31 blockiert. Die Rastelemente 24, 25 befinden sich dann in ihrer freien Stellung, wie sie in Fig. 6 gezeigt ist.

In Fig. 6 befindet sich das Entriegelungselement 1 in einer Stellung, bei der es noch weiter axial verschoben worden ist, so dass die Wirkflächen 13, 14 des Entriegelungselements 1 mit den Entriegelungshebeln 26, 27 derartig zusammenwirken, dass die Entriegelungshebel 26, 27 radial aufeinander zu gedrückt werden. Aufgrund der elastischen Ausbildung der Führungsstege 28, 29 sowie deren elastischer Verbindung zum Rastelement 24, 25 ergibt sich durch das radiale Zusammendrücken der Entriegelungshebel 26, 27 eine Schwenkbewegung und damit ein radiales Entfernen der Rastelemente 24, 25 voneinander. Die Rastvorrichtung 23 wird also gelöst, so dass das Einsteckelement 16 entfernt werden kann.

Solange sich das Entriegelungselement 1 in der in Fig. 6 gezeichneten Stellung befindet, ist auch ein erneutes Einführen des Einsteckelements 16 problemlos möglich. Zum Verrasten muss nur das Entriegelungselement 1 in Richtung Einsteckelement 16 verschoben werden. Das Entriegelungselement 1 ermöglicht ein relativ einfaches Bedienen der Entriegelungshebel 26, 27, ohne dass ein direkter manueller Zugriff zu den Entriegelungshebeln 26, 27 bestehen muss.

Damit ergibt sich ein vereinfachtes Entriegeln der Rastvorrichtung des Kupplungselements und damit eine vereinfachte Demontage.

## Patentansprüche

1. Kupplungselement für eine Fluidleitung mit einem Gehäuse, das einen Aufnahmebereich zur Aufnahme eines Einsteckelements aufweist, wobei der Aufnahmebereich eine Rastvorrichtung zum rastenden Verbinden mit dem Einsteckelement aufweist, die mindestens ein Rastelement umfasst, das einen Entriegelungshebel aufweist, **dadurch gekennzeichnet, dass** ein Entriegelungselement (1) zwischen einer ersten Stellung, in der es mit dem Entriegelungshebel (26, 27) zusammenwirkt, und einer zweiten Stellung, in der das Entriegelungselement (1) den Entriegelungshebel (26, 27) freigibt, bewegbar ist.

2. Kupplungselement nach Anspruch 1, **dadurch gekennzeichnet, dass** der Entriegelungshebel (26, 27) einstückig mit dem Rastelement (24, 25) ausgebildet.

3. Kupplungselement nach Anspruch 1 oder 2, **dadurch gekennzeichnet, dass** die Rastvorrichtung (23) mindestens zwei Rastelemente (24, 25) aufweist, wobei die Rastelemente (24, 25) auf einer Kreisbahn angeordnet sind, wobei durch Drücken des Entriegelungshebels (26, 27) radial nach innen das Rastelement (24, 25) radial nach außen bewegbar ist.

4. Kupplungselement nach einem der Ansprüche 1 bis 3, **dadurch gekennzeichnet, dass** das Entriegelungselement (1) eine der Anzahl der Rastelemente (26, 27) entsprechende Anzahl an parallel angeordneten Stegen (2, 3) aufweist, die jeweils eine Wirkfläche (13, 14) aufweisen.

5. Kupplungselement nach Anspruch 4, **dadurch gekennzeichnet, dass** die Wirkflächen (13, 14) an radial nach innen gerichteten Vorsprüngen (11, 12) angeordnet sind, die insbesondere an Enden (5, 6) der Stege (2, 3) ausgebildet sind.

6. Kupplungselement nach Anspruch 5, **dadurch gekennzeichnet, dass** die Stege (2, 3) an den Enden (5, 6), an denen die Vorsprünge (11, 12) ausgebildet sind, miteinander verbunden sind, wobei die Verbindung (4) gegebenenfalls bogenförmig ausgebildet ist, deren Krümmung insbesondere parallel zu einer Krümmung des Gehäuses (18) im Aufnahmebereich (21) verläuft.

7. Kupplungselement nach einem der Ansprüche 4 bis 6, **dadurch gekennzeichnet, dass** die Stege (2, 3) an ihren den Vorsprüngen (11, 12) abgewandten zweiten Enden (8, 9) miteinander über eine zweite Verbindung (7) verbunden sind.

8. Kupplungselement nach Anspruch 7, **dadurch gekennzeichnet, dass** die zweite Verbindung (7) parallel zur ersten Verbindung (4) verläuft.

9. Kupplungselement nach Anspruch 7, **dadurch gekennzeichnet, dass** die zweite Verbindung (7) in einer Ebene mit den Stegen (2, 3) verläuft und insbesondere eine Krümmung aufweist, die von den ersten Enden (5, 6) weg gerichtet ist.

10. Kupplungselement nach einem der Ansprüche 1 bis 9, **dadurch gekennzeichnet, dass** die Rastelemente (24, 25) axial zwischen einer Blockadestellung, in der eine Bewegung der Entriegelungshebel (26, 27) blockiert ist, und einer freien Stellung verschiebbar sind, in der die Entriegelungshebel (26, 27) betätigbar sind.

11. Kupplungselement nach einem der Ansprüche 5 bis 10, **dadurch gekennzeichnet, dass** die Vorsprünge (11, 12) des Entriegelungselements (1) mit Vorsprüngen an den Rastelementen (24, 25) derart zusammenwirken, dass bei Einbringen einer Zugkraft auf das Entriegelungselement (1) die Rastelemente (24, 25) von der Blockierstellung in die freie Stellung bewegbar sind.

12. Kupplungselement nach Anspruch 14, **dadurch gekennzeichnet, dass** bei Erhöhung der Zugkraft die Vorsprünge (11, 12) des Entriegelungselements (1) über die Vorsprünge der Rastelemente (24, 25) gleiten, so dass die Wirkflächen (13, 14) mit den Entriegelungshebeln (26, 27) zusammen wirken.

13. Kupplungselement nach einem der Ansprüche 1 bis 12, **dadurch gekennzeichnet, dass** die Rastelemente (24, 24) nach Verrasten mit dem Einsteckelement (16) durch Zug am Einsteckelement (16) in die Blockadestellung bewegbar sind.

14. Entriegelungselement, das mindestens zwei parallel angeordnete Stege (2, 3) aufweist, die an ihren Enden jeweils über eine Verbindung 4, 7 miteinander verbunden sind, wobei das Entriegelungselement (1) zum Entriegeln einer Rastvorrichtung eines Kupplungselements nach einem der Ansprüche 1 bis 13 einsetzbar ist.
